# EUROPEAN PATENT APPLICATION

(11) **EP 4 538 569 A1**
(43) Date of publication of application: **16.04.2025**
(21) Application number: 23461664.7
(22) Date of filing: 10.10.2023
(51) Int. Cl.: F16K 15/14, F16K 49/00, E03F 1/00

(54) **HEATED VALVE ASSEMBLY**

(71) Applicant: Goodrich Corporation, Charlotte, NC 28217 (US)
(72) Inventor: WIRNIAK, Pawe, 51-317 Wroclaw (PL); S OMIANY, Krzysztof, 51-317 Wroclaw (PL); KROCZEK, Piotr Jacek, 51-317 Wroclaw (PL); MROCZKOWSKI, Piotr Pawe, 51-317 Wroclaw (PL); TUREK, ukasz, 51-317 Wroclaw (PL)
(74) Representative: Dehns

(57) **Abstract**

A heated valve assembly, comprising a valve housing (104) the interior of which defines a flow passage (A) between a first end (110) and a second end (112), and a valve assembly located in the flow passage, the valve assembly comprising a valve seat (100) extending across the flow passage and a moveable valve member (300) movable in the flow passage relative to the valve seat between a closed position, in which the moveable valve member is sealing engaged with the valve seat to prevent flow of fluid in the flow passage past the valve assembly, and an open position in which the moveable valve member is moved out of sealing engagement with the valve seat; and wherein the valve seat comprises a valve seat housing (102) of thermally conductive material, and one or more heater elements (306) incorporated within the valve seat housing.

## Description

### TECHNICAL FIELD

The present disclosure is concerned with providing heating for valves and valve components e.g. to prevent freezing.

### BACKGROUND

Valves of many types are known to regulate the flow of fluid through a system. Such valves can be manual or motorized. Mechanical, hydraulic and electrical valves are known and used in many fields. Often, such valves and associated pipes are required to operate in extreme environments and are required to be able to continue to operate reliably in environments where e.g. contamination, vibration, pressure and or temperatures can impact operation. One field of application where the valve components are subjected to particularly low temperatures is in the aerospace field. Valves are used to drain fluid from water systems in the aircraft or to drain water that has accumulated in parts of the aircraft such as the fuel tank. Valves are also used in vacuum toilets used e.g. (but not only) in aircraft. An example of such valves is a check valve, or bypass check valve, that is incorporated between the vacuum pump or generator and the waste tank of a vacuum toilet. The bypass check valve is arranged to open in the event of excess pressure in the vacuum - waste tank line to depressurise the line. Components such as water pipes and valves designed for aerospace applications often face many unique challenges. One of the main challenges is high altitude operation with ambient temperatures around -45°C (-50°F). At such temperatures, water in or around the valve parts can freeze and prevent reliable operation of the valve. In bypass check valves, for example, if the valve is not positioned in a location with climate control, and/or if the valve is oriented such that condensation can accumulate in the valve, the valve parts can become frozen and inoperable, which can lead to damage to the overall system of which the check valve is a part. Valves can become frozen in a completely closed or partially open position. For this reason, many valves require some form of heating to prevent water in or on the valve from freezing.

Typically, silicone heaters are used since these can be formed as flexible sheets or sleeves and fitted around the parts of the valve that require heating.

Although silicone heaters provide an effective and simple solution, silicone has fairly low mechanical properties and so can be damaged during installation or during normal use of the valve and may need to be replaced frequently. Further, the known silicone heaters are provided as a layer around the valve/pipes. This results in an overall increase of the size of the valve/pipes and therefore requires more space for installation. In aircraft, and other applications where space is limited, this can be disadvantageous.

There is, therefore, a need for a simple way of providing heating to valves that avoids these problems.

### SUMMARY

According to this disclosure, there is provided a heated valve assembly, comprising a valve housing defining a fluid flow passage therethrough from a first housing end to a second housing end, a moveable valve part and a valve seat located within the fluid flow passage, wherein the movable valve part moves relative to the valve seat responsive to a pressure differential between the first housing end and the second housing end, the moveable valve part moving between a closed position in sealing engagement with the valve seat and an open position spaced from the valve seat to allow fluid flow past the movable valve part from the first housing end to the second housing end, and wherein a heater is incorporated in the valve seat.

### BRIEF DESCRIPTION

Examples of the heated valve assembly of the disclosure will be described below with reference to the drawings. It should be noted that variations are possible within the scope of the claims.

The arrangement will be described with particular reference to valves used in aerospace, particularly check valves, such as used as bypass check valves in vacuum toilets, but the inventive concept can be equally applied to valves used in other applications where heating is required and the scope of the invention is not limited to any particular application or type of valve.
Figure 1 shows an example of a typical valve used as a check valve in a vacuum toilet system.
Figure 2 shows the location of a valve such as shown in Fig. 1 in a toilet flush system.
Figure 3 shows an example of a heated valve assembly according to the disclosure.

### DETAILED DESCRIPTION

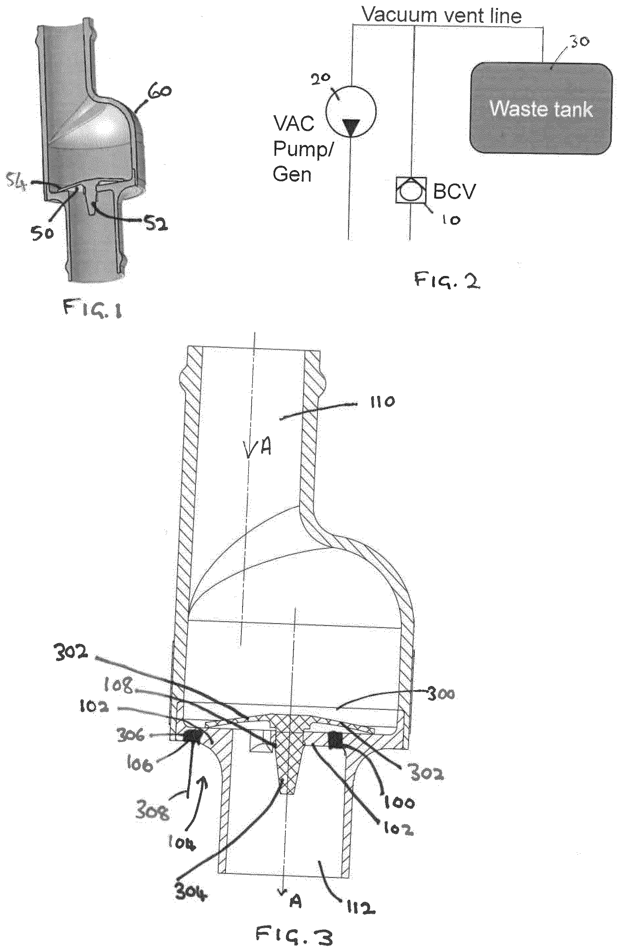

One example of a valve assembly to which the heating arrangement described herein could be applied is a check valve, e.g. a bypass check valve as shown in Fig. 1 and 2. An application for such valves, as shown in Fig. 2 is as a safety valve in a vacuum system such as a vacuum toilet. The check valve is provided as a bypass valve 10 between the vacuum pump 20 and the waste tank 40 and opens and closes responsive to extremes of pressure in the vacuum line. Such check valves and their applications are known in the field and will not be described further, but may be implemented in various ways. The valve will have a moveable valve part, that moves relative to a valve seat, responsive to pressure differentials either side of the valve, the moveable valve member moving, relative to the seat, between an open and a closed position.

An example of a check valve is an umbrella valve such as shown in Fig. 1. An umbrella valve comprises a flexible disk-shaped part 50 from which a stem 52 extends. The flexible disk extends across the interior of the valve housing 60. A valve seat 54, in the form of an interior flange extends inwardly from the valve housing. The flange defines an opening. The disk-shaped part of the umbrella valve rests on the valve seat, in sealing engagement therewith, thus extending across the opening, when the valve is closed. When the pressure differential across the disk-shaped part is such as to open the valve, the disk shaped part deforms to a dome-shape and so its periphery is drawn away from the housing walls and out of sealing engagement with the valve seat. A gap is therefore formed between the disk-shaped part and the valve seat so that fluid clan flow through the check valve via the opening - i.e. the valve is open.

As mentioned above, if this check valve is exposed to very cold temperatures and moisture accumulates, the moveable umbrella part can freeze and become stuck in a particular valve position. The same problem can arise with the moveable valve element of other types of valve.

The valve design according to this disclosure addresses this problem by providing a modified valve seat incorporating a heater. This is explained further with reference to the example shown in Fig. 3.

Fig. 3 also shows the heated valve solution in the context of an umbrella valve similar to that shown in Fig. 1, but this is an example only, and the solution could be applied to different types of valve.

The solution according to the disclosure is to provide a valve seat 100 in the form of a valve seat housing 102 configured to be located across the interior of the valve housing 104. The valve seat housing may be located on an inwardly extending valve housing flange 106 such as a flange that currently defines the valve seat for existing valves. Taking that approach means that the modified valve seat housing could be retro-fitted to existing valve housings. It is, however, also feasible that the valve seat housing of the disclosure is mounted in or formed integrally with the valve housing in other ways. The valve seat housing defines an opening 108 therethrough. A moveable valve element 300, in this example an umbrella as described in relation to Fig. 1, is provided in the valve housing and arranged to move relative to the valve seat to open and close the valve to allow/prevent flow of fluid through the valve housing from one end 110 to another end 112. In the case of an umbrella valve, the moveable element comprises a flexible disk shaped part 302 and a stem 304, wherein the disk shaped part lays across the valve seat and the stem 304 extends through the opening 108 in the valve seat.

The valve seat housing 102 is made of thermally conductive material. Furthermore, the valve seat housing houses one or more heater elements 306. Power is provided to the heaters via e.g. wires 308 extending out from the valve housing. The one or more heater elements are enclosed or encased within the valve seat housing 102 conductive material and are, therefore, protected by the valve seat housing from water etc. within the valve body 104. The heater element(s) 306 is/are preferably fitted into the valve seat housing before the valve seat housing is mounted into the valve housing, so that the valve seat is assembled with the heater element(s) preinstalled. The heater elements may be incorporated into the valve seat housing e.g. by press-fitting, by use of adhesive or in other ways.

In the example shown, an annular heater element 302 is incorporated into the housing to provide heating where the risk of ice bonding to the parts is highest, but other configurations are possible.

Because the valve seat housing is made of thermally conductive material (preferably with high thermal conductivity) the heat from the heaters will spread to the location where the umbrella stem 304, in this case, extends through the opening 108. This prevents freezing and, thus, strain on this part of the valve. The heater elements ensure that the moveable valve part remains moveable relative to the valve seat even at very low temperatures, thus ensuring that the valve continues to function reliably.

As the heater is located in the valve seat and, therefore, close to where the risk of ice bonding is highest, the advantages of heating the valve can be obtained using relatively small heater elements that draw relative low power.

Operation of the valve, per se - i.e. how it opens and closes is unchanged. For an umbrella valve, this is described above with reference to Fig. 1.

## Claims

1. A heated valve assembly, comprising a valve housing (104) the interior of which defines a flow passage (A) between a first end (110) and a second end (112), and a valve assembly located in the flow passage, the valve assembly comprising a valve seat (100) extending across the flow passage and a moveable valve member (300) movable in the flow passage relative to the valve seat between a closed position, in which the moveable valve member is sealing engaged with the valve seat to prevent flow of fluid in the flow passage past the valve assembly, and an open position in which the moveable valve member is moved out of sealing engagement with the valve seat; and wherein the valve seat comprises a valve seat housing (102) of thermally conductive material, and one or more heater elements (306) incorporated within the valve seat housing.

2. The heated valve assembly as claimed in claim 1, wherein the valve seat housing (102) is located on a flange (106) extending inwardly from the valve housing

3. The heated valve assembly as claimed in claim 1 or 2, wherein the valve seat housing (102) is an annular housing defining an opening (108) therethrough.

4. The heated valve assembly as claimed in any preceding claim, wherein the one or more heater elements (306) are press-fit into the valve seat housing.

5. The heated valve assembly as claimed in any preceding claim, wherein the one or more heater elements (306) are secured in the valve seat housing by adhesive.

6. The heated valve assembly as claimed in any preceding claim, wherein the moveable valve element is an umbrella-shaped element.

7. The heated valve assembly as claimed in claim 6, wherein umbrella shaped element is a flexible element having a disk-shaped part (302) and a stem (304) extending therefrom.

8. The heated valve assembly according to any preceding claim, wherein the one or more heater elements (306) comprises one or more annular heater elements.

9. The heated valve assembly according to any preceding claim, further comprising a conductor (308) arranged for providing power to the one or more heater elements.

10. The heated valve assembly according to any preceding claim, being a check valve.

11. The heated valve assembly according to claim 10, being a bypass check valve

12. The heated valve assembly according to any preceding claim, being a check valve for a vacuum toilet.

13. A vacuum toilet having a bypass check valve as claimed in claim 11.
